# EUROPÄISCHE PATENTSCHRIFT

(11) **EP 1 972 577 B1**
(45) Veröffentlichungstag und Bekanntmachung des Hinweises auf die Patenterteilung: **30.06.2010**
(21) Anmeldenummer: 08102339.2
(22) Anmeldetag: 06.03.2008
(51) Int. Cl.: B65G 1/04

(54) **Regallager für Hängeware und Verfahren zu dessen Betrieb**
Shelf storage for garments on hangers and method for its operation
Rayonnage pour articles suspendus et leur procédé de fonctionnement

(30) Priorität: 20.03.2007 DE 102007013863
(43) Veröffentlichungstag der Anmeldung: 24.09.2008
(73) Patentinhaber: Dematic GmbH, 63073 Offenbach am Main (DE); Dürkopp Adler AG, 33719 Bielefeld (DE)
(72) Erfinder: Baumann, Andreas, 45136, Essen (DE); von Schneidemesser, Christian, 23911, Kittlitz (DE); Völker, Sigurd, 32602 Vlotho (DE); Johannesmann, Thomas, 33719 Bielefeld (DE); Wend, Michael, 33619 Bielefeld (DE)
(74) Vertreter: Moser & Götze

(56) Entgegenhaltungen:
- EP-A- 0 333 891
- EP-A- 0 899 217
- DE-C1- 3 807 280

## Beschreibung

Die Erfindung betrifft ein Regallager für Hängeware mit mindestens einem Regal, mit mindestens einem Regalbediengerät zum Be- und Entladen des Hochregals, mit Lagerstangen für die Ware, die die Ware während des Transports auf dem Regalbediengerät und der Lagerung in Regal aufnehmen, wobei die Lagerstangen zwischen dem Regalbediengerät und dem Regal umsetzbar sind und das Regal und das Regalbediengerät Halterungen für die Lagerstangen aufweisen, und ein Verfahren zum Be- und Entladen eines entsprechenden Regalagers.

Viele Waren werden in der Produktion, im Zwischenlager usw. hängend transportiert. Dies gilt auch für Bekleidungsstücke, beispielsweise Mäntel, Sakkos, Anzuge, Kostüme, Overalls usw. Diese werden in der Fabrikation, auf dem Transport, im Zwischenlager, im Endlager und im Einzelhandel auf Kleiderbügeln hängend gehandhabt.

Dabei hat sich herausgestellt, dass es sinnvoll ist, die Ware auf Lagerstangen hängend aufzubewahren bzw. zu transportieren.

Die EP 0 899 217 B1 beschreibt ein Regallager für Hängeware gemäß dem Oberbegriff des Anspruchs 1 bei dem die Ware auf Stangen hängend im Regal aufbewahrt wird. Das Regal wird von einem Regalbediengerät (RBG) be- und entladen, wobei die Ware sich zum Transport und der Lagerung auf den Stangen befindet. Die Stangen werden von einem Hängeförderer angediehen, der mit Laufwagen zur Aufnahme der Stangen versehen ist. An einem Übergabeplatz werden die mit Ware behangenen Stangen von den Laufwagen von dem Regalbediengerät übernommen und in das Regal eingelagert bzw. umgekehrt werden Stangen vom Regalbediengerät an die Laufwagen übergeben.

Die Laufwagen, die beladenen Stangen und die Leerstangen müssen dabei außerhalb des Regals zwischengelagert und über den Förderer zu der Stelle der Beladung/Endladung der Waren an- bzw. abgefördert bzw. dort bereitgestellt werden.

Dies erfordert einen relativ hohen logistischen, technischen und räumlichen Aufwand. So müssen die Laufwagen außerhalb des eigentlichen Lagers, sprich Regal zwischengelagert werden, was Platz und entsprechende Logistik erfordert. Ferner muss ein gewisser technischer Aufwand betrieben werden, um die Lagerstangen sowohl in den Laufwagen, dem Regalbediengerät sowie dem Regal zu fixieren.

Demgegenüber besteht die Aufgabe der vorliegenden Erfindung darin, ein Regallager für Hängeware und ein entsprechendes Verfahren zur Be- und Entladung bereitzustellen, die mit einen einfachen Betrieb und Aufbau eine gute Raumausnutzung ermöglichen.

Diese Aufgabe wird durch das in Anspruch 1 wiedergegebene Regallager sowie dem in Anspruch 17 angegebenen Verfahren gelöst.

Dadurch, dass das Regallager mindestens eine Fördertechnik zum lagerstangenlosen An- und Abfördern der Ware und mindestens eine Übergabestation aufweist, in der die Ware von der Fördertechnik auf die Lagerstangen umgesetzt bzw. von den Lagerstangen abgeben wird, wobei das Regalbediengerät ausgebildet ist, um die leeren oder vollen Lagerstangen von der Übergabestation zu übernehmen oder an die Übergabestation abzugeben, ist es möglich, auf den Einsatz der Laufwagen und somit deren Zwischenspeicher zu verzichten. Es ist nämlich erkannt worden, dass durch die ständige Belegung jedes Regalplatzes mit entweder einer vollen oder leeren Lagerstange und die direkte An- bzw. Abförderung der Waren ohne Stange auf den Laufwagen verzichtet werden kann. Somit ist auch ein Verzicht auf den Zwischenspeicherraum möglich. Dies bringt eine bessere Raumausnutzung mit sich.

Sinnvollerweise werden Regalbediengeräte verwendet, die in den Gassen der Regalreihen bewegt werden, so dass es vorteilhaft ist, wenn die Übergabestation/en an den Stirnseiten der Regalgassen ausgebildet ist/sind.

Weiter ist es bevorzugt, wenn das Regalbediengerät mit Greifmitteln versehen ist, die ausgebildet sind, um mindestens eine leere Lagerstange während der Bewegung zwischen der Übergabestation und dem Regal greifen zu können. Somit kann das Regalbediengerät konstruktiv besonders einfach aufgebaut sein.

Insbesondere ist es sinnvoll, wenn die Greifmittel mindestens zwei Greifereinrichtungen für das Ergreifen der Lagerstangen aufweisen, so dass ohne Umgreifen etc. das Regalbediengerät beide Seiten der Regalgasse bedienen kann. Somit kann der Tausch der Lagerstangen im Regal (d.h. leer gegen voll und umgekehrt) ohne ein Absetzen erfolgen. Zudem ermöglicht eine Ausgestaltung mit drei Greifereinrichtungen eine immer gleiche, mittige Platzierung der vollen Lagerstangen im Regalbediengerät, nämlich in der mittleren der drei Greifereinrichtungen.

In einer Ausführungsform weist das Regalbediengerät eine durch die Greifmittel bedienbare Lagerstangen-Ablage auf, um ein Umlagern leerer Lagerstangen zwischen den Greifereinrichtungen zu erlauben. Somit kann eine leere Lagerstange innerhalb des Regalbediengeräts von Links nach Rechts und umgekehrt verlagert werden. Dies ermöglicht eine flexible Arbeitsweise, da die Lagerstangen so je nach Bedarf beidseitig aufgenommen und abgegeben werden können.

Sinnigerweise sind die Greifmittel für das beidseitige Ergreifen der Lagerstangen ausgebildet. Dabei können die Greifmittel einen zu beiden Seiten des Regalbediengeräts seitlich ausfahrbaren Tragarm aufweisen, der zur Aufnahme/Abgabe einer Lagerstange absenkbar und anhebbar ausgeführt ist. Somit kann das Regalbediengerät von der Lagergasse aus seitlich in die Regale hineingreifen, um die Lagerstangen zu bewegen. Zusätzlich können die Lagerstangen daher durch einfaches Ausheben aus dem Regal ausgelagert bzw. im Regal eingesteckt werden. Hierzu ist das Regal mit entsprechenden Halterungen versehen. Zusätzlich ermöglicht diese Ausgestaltung eine einfache Übernahme der Waren von der Fördertechnik in der Übergabestation durch Ausheben bzw. Abgabe der Waren durch Absenken.

Hierzu ist es günstig, wenn der Tagarm mehrere zueinander linear verschiebliche Tragelemente aufweist, an deren einen Ende die Greifereinrichtungen angeordnet sind.

Des Weiteren ist es vorzuziehen, wenn das Regalbediengerät eine Schutzvorrichtung zum Schutz der Ware beim Transport aufweist, da die Ware oder das Regalbediengerät bei den nicht unerheblichen Beschleunigungen durch Herabfallen bzw. herabfallende Ware beschädigt werden könnte.

Zur Verbesserung der Raumausnutzung kann vorgesehen sein, dass das Regal in der Horizontalen hinter einander angeordnete Lagerplätze als Halterungen für eine doppelt tiefe Lagerung der Lagerstangen aufweist. Hierbei kann jeder Lagerplatz wiederum zwei nebeneinander angeordnete Lagerstangenplätze (Halterungen) aufweisen. Dabei ist es bevorzugt, wenn der vordere Platz immer nur mit vollen und der hintere Platz immer nur mit leeren Lagerstangen belegt werden.

Die Lagerplätze an sich können zur besseren Erreichbarkeit durch das Regalbediengerät in der Vertikalen versetzt angeordnet sein. Dabei ist es bevorzugt, wenn der im Regal hintere Lagerplatz unterhalb des vorderen Lagerplatzes angeordnet ist.

In diesen Fällen ist der Einsatz von Greifmittel mit drei Greifereinrichtungen für das wahlweise Ergreifen der Lagerstangen bevorzugt. Dann

Alternativ können die Lagerplätze in der Vertikalen auf gleicher Höhe angeordnet sein. Wobei die Greifmittel dann vorzugsweise fünf Greifereinrichtungen für das wahlweise Ergreifen der Lagerstangen aufweisen, so dass bei Belegung des hinteren Lagerplatzes die leere Lagerstange vom vorderen Lagerplatz mitgenommen und anschließend nach Bedienung des hinteren Platzes "zurückgelegt" wird.

Erfindungsgemäß ist also erkannt worden, dass entsprechende Regallager technisch wie räumlich und im Betrieb verbessert werden können, wenn im Regal beim Be- und Entladen immer eine volle gegen eine leere Lagerstange oder eine leer gegen eine volle Lagerstange getauscht wird. Hierzu eignet sich insbesondere das zuvor beschriebene Regallager.

In einem besonders bevorzugten Vorgehen ist vorgesehen, dass die Ware lagerstangenlos über eine Fördertechnik an- und abgefördert wird, die Ware in einer Übergabestation von der Fördertechnik durch das Regalbediengerät auf die Lagerstangen umgesetzt bzw. von den Lagerstangen abgeben werden. Hierbei übernimmt das Regalbediengerät leere oder volle Lagerstangen von der Übergabestation oder gibt diese entsprechend an die Übergabestation ab.

Vorteilhafterweise wird die Ware am Übergabepunkt blockweise übergeben bzw. abgenommen, d.h. pro Lagerstange.

Das Be- und Entladen der Ware im Regallager wird vereinfacht, wenn Regalbediengerät während der Bewegung zwischen der Übergabestation und dem Regal eine Lagerstange transportiert und zusätzlich während der Bedienung des Regals mit mehr als einer Lagerstange hantieren kann. Somit zum einen der Aufbau des Regalbediengeräts vereinfacht und der "Tausch" kann trotzdem ohne weitere Maßnahmen und technische Einrichtungen erfolgen. Insbesondere muss so kein Zwischenspeicher für Lagerstangen etc. vorhanden sein. Es reicht theoretisch aus, wenn so viele Lagerstangen wie Regalplätze plus eine zusätzliche Lagerstange vorhanden sind.

Für eine beidseitige Bedienung der zwei Seiten einer Regalgasse bzw. dem an- und abgeben der Lagerstangen oder Ware auf unterschiedlichen Seiten ist es bevorzugt, wenn das Regalbediengerät ein Umlagern leerer Lagerstangen zwischen den Greifereinrichtungen erlaubt. Dazu ist es ebenfalls sinnvoll, wenn die Greifmittel über Tragarm zu beiden Seiten des Regalbediengeräts seitlich ausfahrbar sind und zur Aufnahme/Abgabe einer Lagerstange absenkbar und anhebbar sind. Der Tagarm kann dazu über eine lineare Verschiebung von Tragelementen zu einander, an deren einen Ende die Greifereinrichtungen angeordnet sind, ausgefahren werden.

Zusätzlich kann es im Betrieb Vorteile bringen, wenn das Regalbediengerät um die eigene Hochachse drehbar ist.

Weitere Merkmale, Vorteile und Einzelheiten der Erfindung ergeben sich aus der nachfolgenden Beschreibung eines Ausführungsbeispiels anhand der Zeichnung, in der
- Fig. 1: eine schematische seitliche Ansicht mit Blickrichtung in Verfahrrichtung eines Regalbediengeräts in verschiedenen Stellungen bei der Übernahme von Lagerstangen an der Übergabestation;
- Fig. 2: eine schematische Draufsicht von oben auf das Regalbediengerät aus Fig. 1;
- Fig. 3: eine schematische seitliche Ansicht mit Blickrichtung quer zur Verfahrrichtung auf das Regalbediengerät aus Fig. 1;
- Fig. 4: einen schematische Ansicht des Ablaufs der Übernahme und Abgabe von Lagerstangen durch das Regalbediengerät aus Fig. 1 in der Übergabestation;
- Fig. 5: einen schematische Ansicht des Ablaufs der Abgabe einer vollen Lagerstange durch das Regalbediengerät aus Fig. 1 in ein Lagerplatz des Regals und
- Fig. 6: einen schematische Ansicht des Ablaufs der Entnahme einer vollen Lagerstange aus einem Lagerplatz des Regals durch das Regalbediengerät aus Fig. 1, wenn zwei Lagerstangenplätze vorhanden sind.

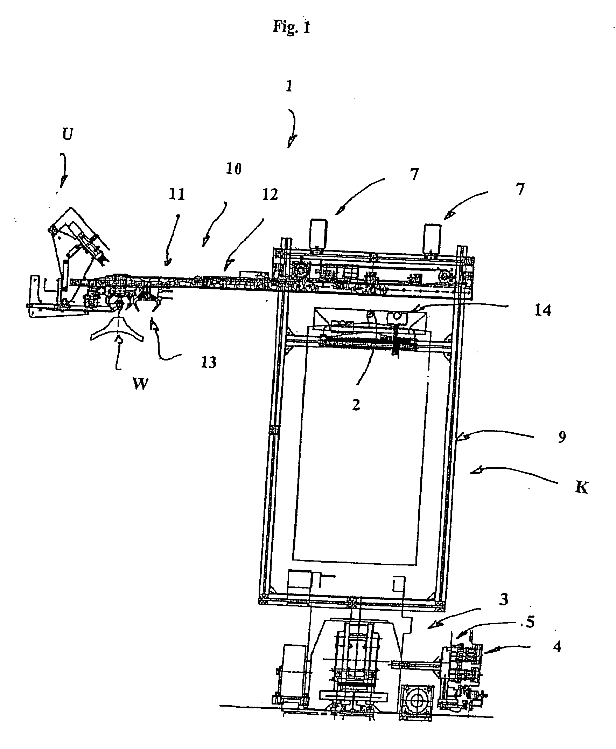

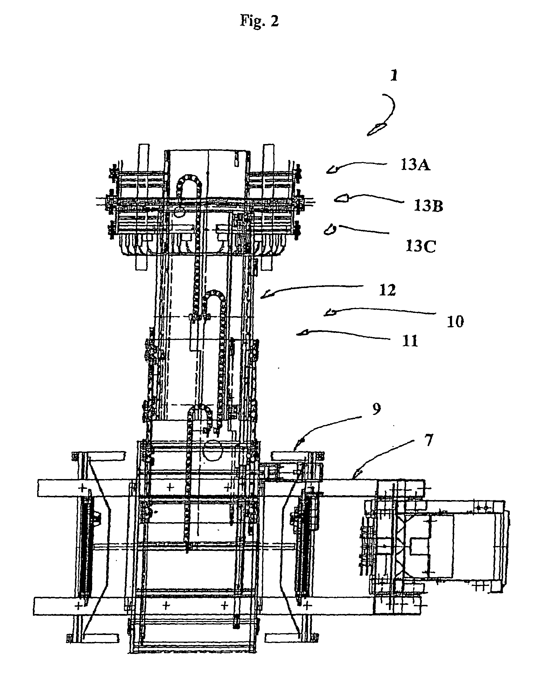

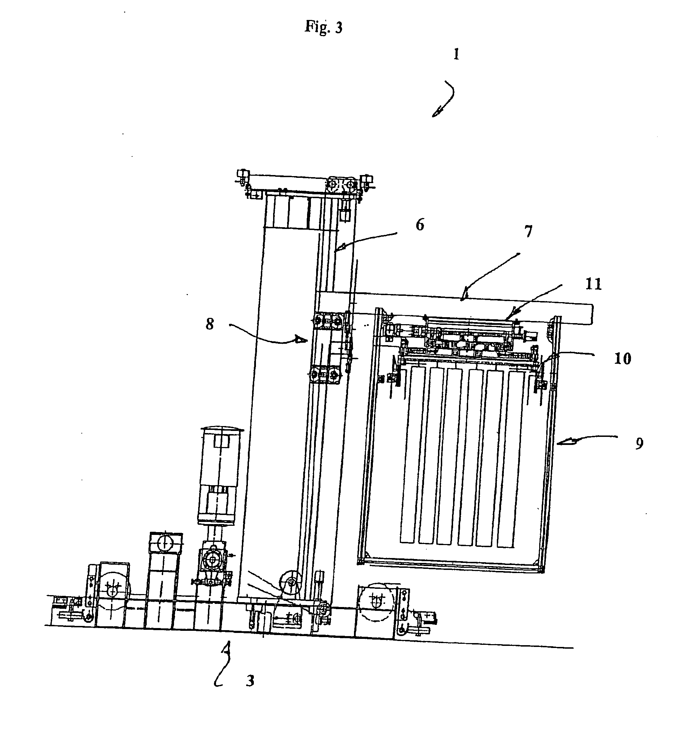

In den Figuren 1 bis 3 ist ein Regalbediengerät 1 für ein Regallager (s. u.) für Hängeware in unterschiedlichen Stellungen dargestellt, das zum Be- und Entladen des Regals mit vollen bzw. leeren Lagerstangen 2 dient.

Regalbediengerät 1 umfasst ein angetriebenes Fahrwerk 3, um in den Regalgassen schienengebunden verfahren zu werden. Die Versorgung des Antriebs erfolgt über entsprechende Schleifleitungen 4 und Mitnehmern 5.

Vom Fahrwerk 3 erstreckt sich ein Mast 6 etwa senkrecht nach oben, an dem eine Doppeltragbalkenkonstruktion 7 über einen Schlitten 8 in der Höhe verfahrbar ist.

An der Doppeltragbalkenkonstruktion 7 ist ein sich nach unten und zur Seite erstreckender Rahmen 9 angeordnet, innerhalb dessen die auf der Lagerstange 2 hängende Ware W beim Transport wie innerhalb eines Käfigs K geschützt transportiert wird.

Ebenfalls an der Doppeltragbalkenkonstruktion 7 befestigt und innerhalb des Rahmens 9 ist das eigentliche Lagerstangenhandhabungs- bzw. Greifmittel 10 angeordnet.

Die Greifmittel weisen einen zu beiden Seiten des Regalbediengeräts 1 seitlich ausfahrbaren Tragarm 11 auf, der zur Aufnahme bzw. Abgabe einer Lagerstange 2 zusätzlich absenkbar und anhebbar ausgeführt ist und zwar durch Verfahren der Doppeltragbalkenkonstruktion 7 über den Schlitten 8.

Der Tagarm 11 umfasst dazu mehrere über Rollen zueinander linear verschiebliche Tragelemente 12, an deren einen Ende drei parallel zu einander angeordnete und unabhängig betätigbare Greifereinrichtungen 13A, B, C angeordnet sind, die Lagerstangen 2 beidseitig zu ergreifen.

Somit kann das Regalbediengerät 1 von der Verfahrschiene aus sowohl in das Regal hineingreifen, um Lagerstangen 2 zu entnehmen bzw. einzulagern, als auch dabei die Lagerstangen 2 in die entsprechenden Plätze ein- bzw. aushängen. Entsprechendes gilt für eine Übergabestationen U, in der die auf den Lagerstangen 2 hängende Ware W von dem Regalbediengerät 1 übernommen oder abgegeben bzw. gegen eine leer Lagerstange getauscht wird.

In Fig. 1 ist eine Stellung der Greifmittel 10 dargestellt, in der der Tragarm 11 ausgefahren ist, um an der Übergabestation U eine volle Lagerstange 2 zu übernehmen und eine leere Lagerstange 2 abzugeben.

Die z.B. auf Bügeln hängende Ware W wird über eine Fördertechnik an die Übergabestation U lagerstangenlos an- und abgefördert und in der Übergabestation U selbst auf die Lagerstangen umgesetzt bzw. von den Lagerstangen abgenommen. Die Übergabestationen sind an den Stirnseiten der Regalgassen ausgebildet, wo sie einerseits an die lagerstangenlose Fördertechnik angebunden und andererseits von den schienengebundenen Regalbediengeräten 1 erreichbar sind.

Das Regalbediengerät 1 umfasst ferner eine durch die Greifmittel 10 erreichbare Lagerstangen-Ablage 14, um ein Umlagern leerer Lagerstangen 2 zwischen den Greifereinrichtungen 13 ohne anderweitiges Absetzen oder Zwischenlagern zu erlauben. Dazu wird die umzulagernde Lagerstange 2 in die Aufnahme der Ablage 14 gelegt und die Lagerstangen-Ablage 14 so verfahren, dass die entsprechend zu belegende Greifereinrichtung 13A, 13B oder 13C die Lagerstange 2 dort aufnehmen kann.

Dies ermöglicht es, mit dem Regalbediengerät 1 leer Lagerstangen 2 wahlweise in das Regal zu beiden Seiten der jeweiligen Gasse einzulagern.

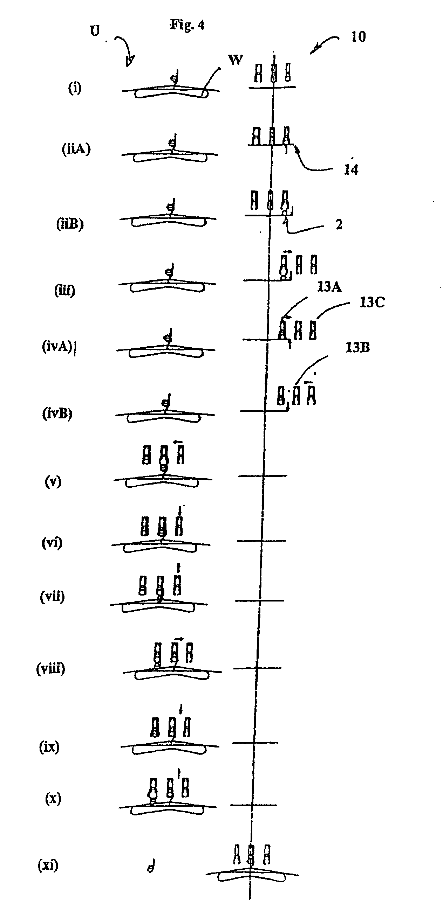

In Figur 4 ist beispielhaft die Übernahme einer vollen Lagerstange 2 durch das Regalbediengerät 1 in der Übergabestation U und Abgabe einer leeren Lagerstange, also der Tausch einer vollen gegen eine leere Lagerstange schematisch dargestellt.

Im Ausgangsschritt i) befindet sich die volle Lagerstange in der Übergabestation U, die in der Figur schematisch links liegend angedeutet ist. Rechts in der Figur ist das Regalbediengerät 1 ebenfalls schematisch in Gestalt seiner Greifmittel 10 bzw. der Greifereinrichtungen 13A, B und C dargestellt. In der rechten Greifeinrichtung 13C ist eine leere Lagerstange angedeutet.

Um die leere Lagerstange im Regalbediengerät 1 gegen die volle Lagerstange in der Übergabestation U zu tauschen, wird zunächst in den Schritten ii) bis vi) die leere Lagerstange im Regalbediengerät 1 über die Lagerstangen-Ablage 14 umgelagert.

Dazu werden zuerst die Greifereinrichtungen 13 gemeinsam abgesenkt (iiA) und die leere Lagerstange auf die Ablage 14 abgelegt. Alternativ kann die Ablage 14 angehoben werden, um die Lagerstange zu übernehmen (iiB).

Anschließend werden die Greifereinrichtungen 13 angehoben und verfahren, bis die linke Greifereinrichtung 13A oberhalb der Lagerstange positioniert ist (iii).

Zur Aufnahme der Lagerstange werden dann die Greifereinrichtungen 13 gemeinsam abgesenkt (ivA), die leere Lagerstange von der Ablage 14 aufgenommen und wieder angehoben. Alternativ kann die Ablage 14 angehoben und anschließend abgesenkt werden, um die Lagerstange zu übergeben (ivB).

Anschließend fährt der Tragarm 11 der Greifmittel 10 seitlich aus dem Regalbediengerät 1 in die Übergabestation U, wobei die Greifereinrichtungen 13 so positioniert, dass die Greifereinrichtung 13A über die Position der vollen Lagerstange hinaus fährt und die mittlere Lagerstange 13B, die immer für die vollen Lagerstangen gedacht ist, oberhalb der vollen Lagerstange in der Übergabestation U positioniert ist (v).

Danach die Greifereinrichtungen 13 gemeinsam abgesenkt (vi), die volle Lagerstange von der Greifereinrichtung 13B ergriffen und anschließend wieder angehoben (vii).

Jetzt wird der Tragarm 11 wieder soweit eingezogen, dass die Greifereinrichtung 13A mit der leeren Lagerstange oberhalb des Ablageplatzes in der Übergabestation U positioniert ist (viii), die Greifereinrichtungen 13 gemeinsam abgesenkt (ix), die leere Lagerstange abgelegt und die Greifereinrichtungen 13 erneut angehoben (x).

Abschließend wird der Tragarm 11 wieder vollständig eingezogen (xi). Die volle Lagerstange ist nun innerhalb des Regalbediengeräts 1 für den Transport in das Regal aufgenommen und die leere Lagerstange befindet sich in der Übergabestation U zur Bestückung mit Ware.

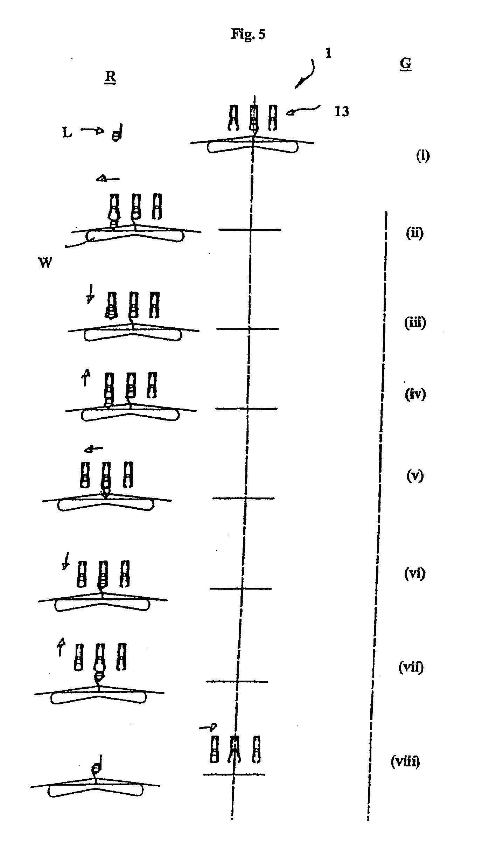

In Figur 5 ist beispielhaft die Einlagerung einer vollen Lagerstange 2 durch das Regalbediengerät 1 in ein Lagerplatz L und die Übernahme einer leeren Lagerstange am Regal, also der Tausch einer vollen gegen eine leere Lagerstange schematisch dargestellt.

Im Ausgangsschritt i) befindet sich die volle Lagerstange in dem Regalbediengerät 1, das in der Figur schematisch rechts liegend angedeutet ist. In der mittleren Greifeinrichtung 13B ist eine volle Lagerstange angedeutet. Links in der Figur ist das Regal ebenfalls schematisch mit einer leeren Lagerstange im Lagerplatz dargestellt.

Um die volle Lagerstange im Regalbediengerät 1 gegen die leere Lagerstange im Lagerplatz L im Regal R zu tauschen, werden die Greifereinrichtungen 13 analog dem obigen Beispiel zunächst über den Tragarm 11 zum Lagerplatz L verfahren. Dabei wird die linke Greifereinrichtung 13A so positioniert, dass sie oberhalb der leeren Lagerstange angeordnet ist (ii).

Dann werden die Greifereinrichtungen 13 gemeinsam abgesenkt (iii) und die leere Lagerstange ergriffen. Daraufhin werden die Greifereinrichtungen 13 wieder angehoben (iv).

Anschließend werden die Greifereinrichtungen 13 verfahren, bis die mittlere Greifereinrichtung 13B oberhalb des Lagerplatzes L positioniert ist (v).

Zur Abgabe der vollen Lagerstange werden dann die Greifereinrichtungen 13 gemeinsam abgesenkt (vi), die volle Lagerstange in den Lagerplatz eingehakt und wieder angehoben (vii).

Abschließend wird der Tragarm 11 wieder vollständig eingezogen (vii). Die volle Lagerstange ist nun im Lagerplatz L im Regal R eingelagert und die leere Lagerstange befindet sich im Regalbediengerät 1.

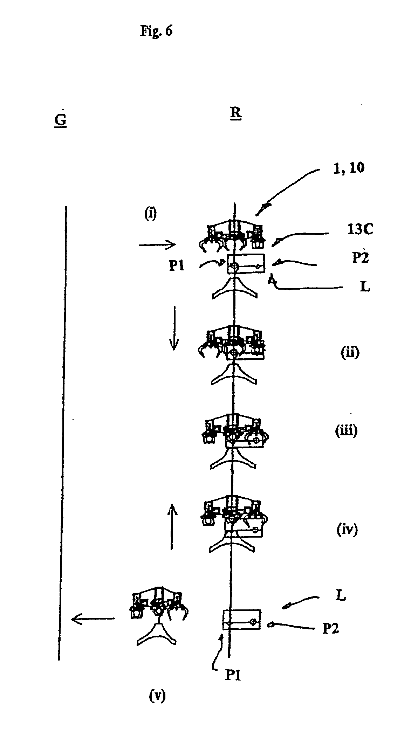

In Figur 6 ist beispielhaft die Entnahme einer vollen Lagerstange 2 durch das Regalbediengerät 1 von einem Lagerplatz L und die Abgabe einer leeren Lagerstange ins Regal schematisch für den Fall dargestellt, das der Lagerplatz L mit zwei Lagerstangenplätzen P ausgebildet ist, von denen der vordere Platz P1 immer nur mit vollen Lagerstangen und der hintere Platz P2 immer nur mit leeren Lagerstangen belegt wird. Die Begriffe "vorne" und "hinten" beziehen sich dabei auf die Einlagerrichtung im Regal R.

Zunächst verfährt der Tragarm die Greifereinrichtungen 13 aus der Gasse G so, dass die leere mittlere Greifereinrichtung 13B oberhalb des vorderen Lagerstangenplatzes P1 und die rechte Greifereinrichtung 13c mit der leeren Lagerstange oberhalb des vorderen Lagerstangenplatzes P2 positioniert sind (i).

Dann werden die Greifereinrichtungen 13 abgesenkt (ii), um die volle Lagerstange mit der mittleren Greifereinrichtung 13B zu ergreifen und die leere Lagerstange mit der rechten Greifereinrichtung 13C abzugeben bzw. einzuhaken (iii).

Abschließend werden die Greifereinrichtungen 13 angehoben (iv) und der Tragarm eingezogen (v).

Somit kann der Tausch der vollen gegen die leere Lagerstange im Gegensatz zu den Beispielen der Figuren 4 und 5 ohne gesonderte Bewegungen der Greifmittel erfolgen.

Bei einer doppelt tiefen Lagerung mittels zweier im Regal in der Horizontalen hintereinander angeordneter Lagerplätze L bei gleicher Höhe ist das oben beschriebene Verfahren der Figuren 4, 5 und 6 analog anzuwenden mit dem Unterschied, dass der hintere Lagerplatz nur zugänglich ist, wenn der vordere nicht mit einer Leerstange belegt ist.

Um dies zu vermeiden, können die Lagerplätze in der Vertikalen versetzt angeordnet sein, wobei der im Regal hintere Lagerplatz unterhalb des vorderen Lagerplatzes angeordnet ist, so dass die Greifmittel unterhalb der leeren Lagerstange im vorderen Platz vorbei verfahren werden können. In diesem Fall reichen nach wie vor drei Greifereinrichtungen aus.

Sind die doppelt tiefen Lagerplätze L dagegen in der Vertikalen auf gleicher Höhe angeordnet, so umfassen die Greifmittel fünf Greifereinrichtungen, so dass die vordere leere Lagerstange bei der Bedienung des hinteren Lagerplatzes "mitgenommen" und nach Abschluss "zurückgebracht" werden kann.

### Bezugszeichenliste

- 1: Regalbediengerät
- 2: Lagerstange
- 3: Fahrwerk
- 4: Schleifleitung
- 5: Mitnehmer
- 6: Mast
- 7: Doppeltragbalkenkonstruktion
- 8: Schlitten
- 9: Rahmen
- 10: Greifmittel
- 11: Tragarm
- 12: Tragelement
- 13A, B, C: Greifereinrichtungen
- 14: Lagerstangen-Ablage

- K: Käfig
- L: Lagerplatz
- P1: vordere Platz
- P2: hintere Platz
- R: Regal
- U: Übergabestation
- W: Ware
- G: Gasse

## Patentansprüche

1. Regallager für Hängeware (W)
mit mindestens einem Regal (R),
mit mindestens einem Regalbediengerät (1) zum Be- und Entladen des Regals (R), mit Lagerstangen (2) für die Ware (W), die die Ware (W) während des Transports auf dem Regalbediengerät (1) und der Lagerung in Regal (R) aufnehmen,
wobei die Lagerstangen (2) zwischen dem Regalbediengerät (1) und dem Regal (R) umsetzbar sind und das Regal (R) und das Regalbediengerät (1) Halterungen (L, 10) für die Lagerstangen (2) aufweisen,
**dadurch gekennzeichnet, dass**
das Regallager mindestens eine Fördertechnik zum lagerstangenlosen An- und Abfördern der Ware (W) und mindestens eine Übergabestation (U) aufweist, in der die Ware (W) von der Fördertechnik auf die Lagerstangen (2) umgesetzt bzw. von den Lagerstangen (2) abgeben wird, wobei das Regalbediengerät (1) ausgebildet ist, um die leeren oder vollen Lagerstangen (2) von der Übergabestation (U) zu übernehmen oder an die Übergabestation (U) abzugeben, wobei das Regalbediengerät (1) als Halterungen mit Greifmitteln (10) versehen ist, die ausgebildet sind, um eine Lagerstange (2) während der Bewegung zwischen der Übergabestation (U) und dem Regal (R) greifen zu können, die Greifmittel (10) mindestens zwei Greifereinrichtungen (13) für das Ergreifen von Lagerstangen (2) aufweisen, und das Regalbediengerät (1) eine durch die Greifmittel (10) erreichbare Lagerstangen-Ablage (14) aufweist, um ein Umlagern leerer Lagerstangen (2) zwischen den Greifereinrichtungen (13) zu erlauben.

2. Regallager nach Anspruch 1, **dadurch gekennzeichnet, dass** die Übergabestation (U) an den Stirnseiten der Regalgassen ausgebildet ist.

3. Regallager nach Anspruch 1, **dadurch gekennzeichnet, dass** die Greifmittel (10) für das beidseitige Ergreifen der Lagerstangen (2) ausgebildet sind.

4. Regallager nach Anspruch 1 oder 3, **dadurch gekennzeichnet, dass** die Greifmittel (10) einen zu beiden Seiten des Regalbediengeräts (1) seitlich ausfahrbaren Tragarm (11) aufweisen, der zur Aufnahme/Abgabe einer Lagerstange (2) absenkbar und anhebbar ausgeführt ist.

5. Regallager nach Anspruch 4, **dadurch gekennzeichnet, dass** der Tagarm (11) mehrere zueinander linear verschiebliche Tragelemente (12) aufweist, an deren einen Ende die Greifereinrichtungen (13) angeordnet sind.

6. Regallager nach einem der vorhergehenden Ansprüche, **dadurch gekennzeichnet, dass** das Regalbediengerät (1) eine Schutzvorrichtung (K) zum Schutz der Ware (W) beim Transport aufweist.

7. Regallager nach einem der vorhergehenden Ansprüche, **dadurch gekennzeichnet, dass** das Regal (R) in der Horizontalen hintereinander angeordnete Lagerplätze (L) als Halterungen für eine doppelt tiefe Lagerung der Lagerstangen (2) aufweist.

8. Regallager nach Anspruch 7, **dadurch gekennzeichnet, dass** jeder Lagerplatz zwei nebeneinander angeordnete Lagerstangenplätze (P1, P2) aufweist.

9. Regallager nach Anspruch 7 oder 8, **dadurch gekennzeichnet, dass** die Lagerplätze (P1, P2) in der Vertikalen versetzt angeordnet sind.

10. Regallager nach Anspruch 9, **dadurch gekennzeichnet, dass** der im Regal hintere Lagerplatz (P2) unterhalb des vorderen Lagerplatzes (P1) angeordnet ist.

11. Regallager nach einem der Ansprüche 7 bis 10, **dadurch gekennzeichnet, dass** die Greifmittel (10) drei Greifereinrichtungen (13A, B, C) für das wahlweise Ergreifen der Lagerstangen (2) aufweisen.

12. Regallager nach Anspruch 7 oder 8, **dadurch gekennzeichnet, dass** die Lagerplätze (L, P1, P2) in der Vertikalen auf gleicher Höhe angeordnet sind.

13. Regallager nach Anspruch 12, **dadurch gekennzeichnet, dass** die Greifmittel (10) fünf Greifereinrichtungen (13) für das wahlweise Ergreifen der Lagerstangen (2) aufweisen.

14. Verfahren zum Be- und Entladen eines Regallagers für Hängeware (W) mit mindestens einem Regal (R),
mit mindestens einem Regalbediengerät (1) zum Be- und Entladen des Regals (R), mit Lagerstangen (2) für die Ware (W), die die Ware (W) während des Transports auf dem Regalbediengerät (1) und der Lagerung in Regal (R) aufnehmen,
wobei die Lagerstangen (2) zwischen dem Regalbediengerät (1) und dem Regal (R) umsetzbar sind und das Regal (R) und das Regalbediengerät (1) Halterungen (L, 10) für die Lagerstangen (2) aufweisen,
**dadurch gekennzeichnet, dass** im Regal (R) beim Be- und Entladen immer eine volle gegen eine leere Lagerstange (2) oder eine leere gegen eine volle Lagerstange (2) getauscht wird.

15. Verfahren nach Anspruch 14, **dadurch gekennzeichnet, dass** die Ware (2) lagerstangenlos über eine Fördertechnik an- und abgefördert wird, die Ware (2) in einer Übergabestation (U) von der Fördertechnik auf die Lagerstangen (2) umgesetzt bzw. von den Lagerstangen (2) abgeben werden.

16. Verfahren nach Anspruch 15, **dadurch gekennzeichnet, dass** das Regalbediengerät (1) leere oder volle Lagerstangen (2) von der Übergabestation (U) übernimmt oder an die Übergabestation (U) abgibt.

17. Verfahren nach Anspruch 14 oder 15, **dadurch gekennzeichnet, dass** die Ware (W) der Übergabestation (U) blockweise übergeben bzw. abgenommen wird.

18. Verfahren nach einem der Ansprüche 14 bis 17, **dadurch gekennzeichnet, dass** das Regalbediengerät (1) während der Bewegung zwischen der Übergabestation (U) und dem Regal (R) eine Lagerstange (2) transportiert.

19. Verfahren nach einem der Ansprüche 14 bis 18, **dadurch gekennzeichnet, dass** das Regalbediengerät (1) während der Bedienung des Regals (R) mit mehr als einer Lagerstange (2) hantieren kann.

20. Verfahren nach einem der Ansprüche 14 bis 19, **dadurch gekennzeichnet, dass** das Regalbediengerät (1) eine Lagerstange (2) während der Bewegung zwischen der Übergabestation (U) und dem Regal (R) mit Greifmitteln (10) hält.

21. Verfahren nach Anspruch 20, **dadurch gekennzeichnet, dass** die Greifmittel(10) ein beidseitiges Ergreifen der Lagerstangen (2) über Greifereinrichtungen (13) erlaubt.

22. Verfahren nach Anspruch 20 oder 21, **dadurch gekennzeichnet, dass** das Regalbediengerät (1) leere Lagerstangen (2) zwischen Greiferelementen (13) der Greifmittel (10) umlagern kann.

23. Verfahren nach einem der vorhergehenden Ansprüche 20 bis 22, **dadurch gekennzeichnet, dass** die Greifmittel (10) über einen Tragarm (11) zu beiden Seiten des Regalbediengeräts (11) seitlich ausfahrbar sind und zur Aufnahme/Abgabe einer Lagerstange (2) absenkbar und anhebbar sind.

24. Verfahren nach Anspruch 23, **dadurch gekennzeichnet, dass** der Tagarm über eine lineare Verschiebung von Tragelementen (12) zu einander, an deren einen Ende die Greifereinrichtungen (13) angeordnet sind, ausgefahren wird.

25. Verfahren nach einem der Ansprüche 14 bis 24, **dadurch gekennzeichnet, dass** das Regalbediengerät (1) sich um die eigene Hochachse drehen kann.

## Claims

1. Rack-equipped store for hanging goods (W), having at least one rack (R), having at least one rack-serving unit (1) to load and unload the rack (R), having storage rails (2) for the goods (W) which hold the goods (W) while they are being transported on the rack-serving unit (1) and while they are stored in the rack, the storage rails (2) being able to be changed over between the rack-serving unit (1) and the rack (R), and the rack (R) and the rack-serving unit (1) having mountings (L, 10) for the storage rails (2), **characterised in that** the rack-equipped store has at least one feeding system for supplying the goods (W) and taking them away without the storage rails and has at least one transfer station (U) at which the goods (W) are moved onto the storage rails (2) or are fed off the storage rails (2), by the feeding system, the rack-serving unit (1) being designed to accept the empty or full storage rails (2) from the transfer station or to deliver them to the transfer station (U), the transfer station (U) being provided, as mountings, with gripping means (10) which are designed to be able to grip a storage rail (2) during the movement between the transfer station (U) and the rack (R), the gripping means (10) having at least two gripper arrangements (13) for taking hold of storage rails (2), and the rack-serving unit (1) having a storage-rod holding point able to be reached by the gripping means (10) to enable empty storage rails (2) to be shifted in position between the gripper arrangements (13).

2. Rack-equipped store according to claim 1, **characterised in that** the transfer station (U) is formed at the ends of the aisles between the racks.

3. Rack-equipped store according to claim 1, **characterised in that** the gripping means (10) are designed to take hold of the storage rails (2) on both sides.

4. Rack-equipped store according to claim 1 or 3, **characterised in that** the gripping means (10) have a carrying arm (11) which can be extended sideways on both sides of the rack-serving unit (1) and which is designed to be lowerable and raisable to receive/deliver a storage rail (2).

5. Rack-equipped store according to claim 4, **characterised in that** the carrying arm (11) has a plurality of carrying members (12) able to be displaced linearly relative to one another, at one of whose ends the gripper arrangements (13) are located.

6. Rack-equipped store according to one of the foregoing claims, **characterised in that** the rack-serving unit (1) has a protective arrangement (K) to protect the goods (W) during transport.

7. Rack-equipped store according to one of the foregoing claims, **characterised in that** the rack (R) has storage locations (L) which are arranged one behind the other in the horizontal direction to act as mountings for the double-depth storage of the storage rails (2).

8. Rack-equipped store according to claim 7, **characterised in that** each storage location has two locations (P1, P2) for storage rails, which locations (P1, P2) are arranged next to one other.

9. Rack-equipped store according to claim 7 or 8, **characterised in that** the storage locations (P1, P2) are arranged to be staggered in the vertical direction.

10. Rack-equipped store according to claim 9, **characterised in that** the storage location (P2) at the rear of the rack is arranged below the storage location (P1) at the front.

11. Rack-equipped store according to one of claims 7 to 10, **characterised in that** the gripping means (10) have three gripper arrangements (13A, B, C) for selectively taking hold of the storage rails (2).

12. Rack-equipped store according to claim 7 or 8, **characterised in that** the storage locations (L, P1, P2) are arranged at the same height in the vertical direction.

13. Rack-equipped store according to claim 12, **characterised in that** the gripping means (10) have five gripper arrangements (13) for selectively taking hold of the storage rails (2).

14. Method of loading and unloading a rack-equipped store for hanging goods (W) having at least one rack (R), having at least one rack-serving unit (1) to load and unload the rack (R), having storage rails (2) for the goods (W) which hold the goods (W) while they are being transported on the rack-serving unit (1) and while they are stored in the rack, the storage rails (2) being able to be changed over between the rack-serving unit (1), and the rack (R) and the rack (R) and the rack-serving unit (1) having mountings (L, 10) for the storage rails (2), **characterised in that** a full storage rail (2) is always exchanged for an empty one, or an empty storage rail (2) for a full one, in the rack (R) at the time of loading and unloading.

15. Method according to claim 14, **characterised in that** the goods (2) are supplied and taken away without storage rails by means of a feeding system and the goods (2) are changed over onto the storage rails (2) or are delivered from the storage rails (2) by the feeding system at a transfer station (U).

16. Method according to claim 15, **characterised in that** the rack-serving unit (1) accepts empty or full storage rails (2) from the transfer station (U) or delivers empty or full storage rails (2) to the transfer station (U).

17. Method according to claim 14 or 15, **characterised in that** the goods (W) are handed over to or accepted from the transfer station (U) in blocks.

18. Method according to one of claims 14 to 17, **characterised in that** the rack-serving unit (1) transports one storage rail (2) during the movement between the transfer station (U) and the rack (R).

19. Method according to one of claims 14 to 18, **characterised in that** the rack-serving unit (1) is able to work with more than one storage rail (2) while serving the rack (R).

20. Method according to one of claims 14 to 19, **characterised in that** the rack-serving unit (1) holds one storage rail (2) with gripping means (10) during the movement between the transfer station (U) and the rack (R).

21. Method according to claim 20, **characterised in that** the gripping means (10) allow the storage rails (2) to be taken hold of on both sides by gripper arrangements (13).

22. Method according to claim 20 or 21, **characterised in that** the rack-serving unit (1) is able to shift empty storage rails (2) in position between gripper members (13) belonging to the gripping means (10).

23. Method according to one of foregoing claims 20 to 22, **characterised in that** the gripping means (10) can be extended sideways on both sides of the rack-serving unit (11) by means of a carrying arm (11) and is lowerable and raisable to receive/deliver a storage rail (2).

24. Method according to claim 23, **characterised in that** the carrying arm is extended by a linear movement of carrying members (12) at one end of which the gripper arrangements (13) are located.

25. Method according to one of claims 14 to 24, **characterised in that** the rack-serving unit (1) is able to rotate on its own vertical axis.

## Revendications

1. Magasin à rayonnages pour produit suspendu (W), ledit magasin à rayonnages comportant
au moins un rayonnage (R),
au moins un gerbeur (1) destiné à charger et décharger le rayonnage (R),
des barres d'entreposage (2) destinées au produit (W), lesquelles barres d'entreposage reçoivent le produit (W) pendant le transport sur le gerbeur (1) et l'entreposage dans le rayonnage (R),
les barres d'entreposage (2) pouvant être déplacées entre le gerbeur (1) et le rayonnage (R) et le rayonnage (R) et le gerbeur (1) comportant des supports (L, 10) destinés aux barres d'entreposage (2),
**caractérisé en ce que**
le magasin à rayonnages possède au moins une technique de transport pour amener et emmener le produit (W) sans barres d'entreposage et au moins une station de transfert (U) dans laquelle le produit (W) est transféré sur les barres d'entreposage (2), respectivement retiré des barres de transport, par la technique de transport, le gerbeur (1) étant conformé pour prendre les barres d'entreposage vides ou pleines (2) à la station de transfert (U) ou les délivrer à la station de transfert (U), le gerbeur (1) étant doté de supports qui comportent des moyens de préhension (10) qui sont conformés pour pouvoir prendre une barre d'entreposage (2) pendant le déplacement entre la station de transfert (U) et le rayonnage (R), les moyens de préhension (10) comportant au moins deux mécanismes de préhension (13) destinés à prendre des barres d'entreposage (2) et le gerbeur (1) comportant un rangement de barres d'entreposage (14), pouvant être atteint par les moyens de préhension (10), pour pouvoir modifier l'entreposage de barres vides (2) entre les mécanismes de préhension (13).

2. Magasin à rayonnages selon la revendication 1, **caractérisé en ce que** la station de transfert (U) est conformée sur les cotés frontaux des allées de rayonnages.

3. Magasin à rayonnages selon la revendication 1, **caractérisé en ce que** les moyens de préhension (10) sont conformés pour saisir les barres d'entreposage (2) des deux côtés.

4. Magasin à rayonnages selon la revendication 1 ou 3, **caractérisé en ce que** les moyens de préhension (10) comportent un bras de support (11) qui peut être déployé latéralement en direction des deux côtés du gerbeur (1) et qui peut être abaissé et soulevé afin de recevoir ou délivrer une barre d'entreposage (2).

5. Magasin à rayonnages selon la revendication 4, **caractérisé en ce que** le bras de support (11) comporte plusieurs éléments de support (12) qui sont déplaçables linéairement l'un vers l'autre et à une extrémité desquels sont disposés les mécanismes de préhension (13).

6. Magasin à rayonnages selon l'une des revendications précédentes, **caractérisé en ce que** le gerbeur (1) comporte un dispositif de protection (K) destiné à protéger le produit (W) pendant le transport.

7. Magasin à rayonnages selon l'une des revendications précédentes, **caractérisé en ce que** le rayonnage (R) comporte des emplacements d'entreposage (L) qui sont disposés l'un derrière l'autre dans la direction horizontale et qui sont conformés en supports pour effectuer un double entreposage des barres d'entreposage (2) dans le sens de la profondeur.

8. Magasin à rayonnages selon la revendication 7, **caractérisé en ce que** chaque emplacement d'entreposage comporte deux emplacements de barre d'entreposage (P1, P2) disposés l'un à côté de l'autre.

9. Magasin à rayonnages selon la revendication 7 ou 8, **caractérisé en ce que** les emplacements d'entreposage (P1, P2) sont disposés en étant décalés dans la direction verticale.

10. Magasin à rayonnages selon la revendication 9, **caractérisé en ce que** l'emplacement d'entreposage (P2), situé à l'arrière dans le rayonnage, est disposé au-dessous de l'emplacement d'entreposage avant (P1).

11. Magasin à rayonnages selon l'une des revendications 7 à 10, **caractérisé en ce que** les moyens de préhension (10) comportent trois mécanismes de préhension (13A, B, C) pour saisir au choix les barres d'entreposage (2).

12. Magasin à rayonnages selon la revendication 7 ou 8, **caractérisé en ce que** les emplacements d'entreposage (L, P1, P2) sont disposés à la même hauteur dans la direction verticale.

13. Magasin à rayonnages selon la revendication 12, **caractérisé en ce que** les moyens de préhension (10) comportent cinq mécanismes de préhension (13) pour saisir au choix les barres d'entreposage (2).

14. Procédé de chargement et de déchargement d'un magasin à rayonnages pour produit suspendu (W), ledit magasin à rayonnages comportant
au moins un rayonnage (R),
au moins un gerbeur (1) destiné à charger et décharger le rayonnage (R),
des barres d'entreposage (2) destinées au produit (W), lesquelles barres d'entreposage reçoivent le produit (W) pendant le transport sur le gerbeur (1) et l'entreposage dans le rayonnage (R),
les barres d'entreposage (2) pouvant être déplacées entre le gerbeur (1) et le rayonnage (R) et le rayonnage (R) et le gerbeur (1) comportant des supports (L, 10) destinés aux barres d'entreposage (2),
**caractérisé en ce que** l'on remplace toujours dans le rayonnage (R), lors du chargement et du déchargement, une barre d'entreposage pleine par une barre d'entreposage vide (2) ou une barre d'entreposage vide par une barre d'entreposage pleine (2).

15. Procédé selon la revendication 14, **caractérisé en ce que** le produit (W) est amené et emmené sans barres d'entreposage par une technique de transport, le produit (W) est transféré sur les barres d'entreposage (2), respectivement retiré des barres d'entreposage (2), par la technique de transport dans une station de transfert (U).

16. Procédé selon la revendication 15, **caractérisé en ce que** le gerbeur (1) prend des barres d'entreposage vides ou pleines (2) à la station de transfert (U) ou les délivrent à la station de transfert (U).

17. Procédé selon la revendication 14 ou 15, **caractérisé en ce que** le produit (W) de la station de transfert (U) est pris ou délivré par blocs.

18. Procédé selon l'une des revendications 14 à 17, **caractérisé en ce que** le gerbeur (1) transporte une barre d'entreposage (2) pendant le déplacement entre la station de transfert (U) et le rayonnage (R).

19. Procédé selon l'une des revendications 14 à 18, **caractérisé en ce que** le gerbeur (1) peut manipuler plus d'une barre d'entreposage (2) pendant l'utilisation du rayonnage (R).

20. Procédé selon l'une des revendications 14 à 19, **caractérisé en ce que** le gerbeur (1) maintient une barre d'entreposage (2) à l'aide de moyens de préhension (10) pendant le déplacement entre la station de transfert (U) et le rayonnage (R).

21. Procédé selon la revendication 20, **caractérisé en ce que** les moyens de préhension (10) permettent de saisir les barres d'entreposage (2) des deux côtés à l'aide de mécanismes de préhension (13).

22. Procédé selon la revendication 20 ou 21, **caractérisé en ce que** le gerbeur (1) peut modifier l'entreposage de barres d'entreposage vides (2) entre des éléments de préhension (13) des moyens de préhension (10).

23. Procédé selon l'une des revendications précédentes 20 à 22, **caractérisé en ce que** les moyens de préhension (10) peuvent être déployés latéralement en direction des deux côtés du gerbeur (1) par un bras de support (11) et peuvent être abaissés et soulevés afin de recevoir ou délivrer une barre d'entreposage (2).

24. Procédé selon la revendication 23, **caractérisé en ce que** le bras de support est déployé en déplaçant linéairement, l'un vers l'autre, des éléments de support (12) à une extrémité desquels sont disposés les mécanismes de préhension (13).

25. Procédé selon l'une des revendications 14 à 24, **caractérisé en ce que** le gerbeur (1) peut tourner autour de son propre axe vertical.
